# EUROPEAN PATENT SPECIFICATION

(11) **EP 3 141 744 B1**
(45) Date of publication and mention of the grant of the patent: **03.07.2019**
(21) Application number: 16166967.6
(22) Date of filing: 26.04.2016
(51) Int. Cl.: F03D 7/02

(54) **WIND TURBINE POWER GENERATING APPARATUS AND METHOD OF STARTING THE SAME**
WINDTURBINENSTROMERZEUGUNGSVORRICHTUNG UND VERFAHREN ZUM STARTEN DAVON
APPAREIL DE GÉNÉRATION DE PUISSANCE DE TURBINE ÉOLIENNE ET SON PROCÉDÉ DE DÉMARRAGE

(30) Priority: 11.09.2015 JP 2015179018
(43) Date of publication of application: 15.03.2017
(73) Proprietor: Mitsubishi Heavy Industries, Ltd., Tokyo 108-8215 (JP)
(72) Inventor: AYAGI, Tsuyoshi, MINATO-KU, TOKYO, 108-8215 (JP)
(74) Representative: Intès, Didier Gérard André

(56) References cited:
- US-A1- 2011 140 423
- US-A1- 2014 054 893

## Description

### TECHNICAL FIELD

The present disclosure relates to a wind turbine power generating apparatus and a method of starting the same.

### BACKGROUND ART

Use of wind turbine power generating apparatuses has been promoted in recent years to preserve the environment, and a technique to connect a wind turbine power generating apparatus to a utility grid stably has been required.

Generally, to connect a wind turbine power generating apparatus to a utility grid to start power transmission, an anemometer disposed in the vicinity of a wind turbine rotor firstly measures the wind speed around the wind turbine rotor, and if an average wind speed in a predetermined period exceeds a cut-in wind speed, the pitch angle of blades is changed from a feather side toward a fine side to start rotation of the wind turbine rotor, thereby starting the wind turbine power generating apparatus. When the rotation speed of the wind turbine rotor (or the rotation speed of a generator) reaches a connection rotation speed, the wind turbine power generating apparatus is connected to the utility grid.

For instance, Patent Document 1 discloses a method of changing the pitch angle of blades from the feather side toward the fine side at a constant rate, and matching a generator rotation speed with a connection rotation speed by adjusting the pitch angle if the generator rotation speed exceeds the connection rotation speed. Further, Patent Document 2 discloses a method of increasing the rotation speed of a wind turbine rotor by changing the pitch angle of blades from the feather side toward the fine side in stages before connection to a utility gird. US2011140423 (A1) discloses a method for operating a wind turbine comprising adjusting at least one wind turbine parameter to increase the rotational speed of the wind rotor; increasing the rotational speed of the wind rotor; during increasing of the rotational speed of the wind rotor determining if the wind turbine would exceed a predetermined amount of energy to be fed into the grid at the actual wind rotor rotational speed; and during increasing of the rotational speed of the wind rotor connecting the wind turbine to the grid if determining that the wind turbine would exceed the predetermined amount of energy to be fed into the grid.

### Citation List

### Patent Literature

Patent Document 1: US 2007/0194574A
Patent Document 2: JP 5079092B

### SUMMARY

As described above, when a wind turbine power generating apparatus is to be connected, a generator is connected to a utility grid with the rotation speed of a wind turbine rotor (or the generator rotation speed) being controlled to a rotation speed (connection rotation speed) suitable for connection, so as not to negatively affect the utility grid. After connection, the generator rotation speed is maintained to be at least a rotation speed at which the generator is to be disconnected (disconnection rotation speed), to stably continue a connected state of the wind turbine power generating apparatus.

However, there is a case in which a wind turbine power generating apparatus cannot be smoothly connected even if the rotation speed of the wind turbine rotor is satisfying a connection condition. For instance, if the wind speed is relatively low even though the generator rotation speed has reached the connection rotation speed, the generator rotation speed may decrease to the disconnection rotation speed or below immediately after connection of the generator, and the generator may disconnect shortly. Further, if a connecting operation is to be carried out after synchronization of voltage, frequency, and amplitude by a controller for controlling a circuit breaker, for instance a circuit control unit (CCU), a high increasing rate of the rotation speed due to a high wind speed during connection of the wind turbine power generating apparatus may make it difficult to synchronize the voltage, frequency, and amplitude and require a longer time to complete the connection, thus resulting in issuance of a connection-failure alert.

In this regard, Patent Documents 1 and 2 disclose a method of increasing a generator rotation speed to a connection rotation speed suitably, but does not disclose a specific measure to reduce the risk of connection failure.

In view of this, an object of at least some embodiments of the present invention is to provide a wind turbine power generating apparatus and a method of starting the same, with a reduced risk of failure in connecting a wind turbine power generating apparatus to a utility grid.

The present invention relates to a wind turbine power generating apparatus according to claim 1 and a method of starting a wind turbine power generating apparatus according to claim 7.
(1) A wind turbine power generating apparatus for generating electric power from wind energy, according to some embodiments of the present disclosure, comprises: a wind turbine rotor including at least one blade; a pitch drive part for changing a pitch angle of the at least one blade; a generator configured to be driven by rotational energy of the wind turbine rotor; a circuit breaker for switching a connection state of the generator with respect to a utility grid; and a controller for controlling the wind turbine power generating apparatus. The controller includes: a pitch control part configured to control the pitch drive part in a constant rotation-speed control mode for limiting a change rate of the pitch angle to be not greater than an upper limit value and maintaining a rotation speed of the wind turbine rotor at a target rotation speed corresponding to a connection generator rotation speed, before the rotation speed of the wind turbine rotor reaches the target rotation speed; and a connection-command generation part configured to provide the circuit breaker with a connection command to connect the generator to the utility grid while the rotation speed of the wind turbine rotor is maintained at the target rotation speed.

With the above configuration (1), the pitch control part controls the pitch drive part in the constant rotation-speed control mode for maintaining the rotation speed of the wind turbine rotor at the target rotation speed, before connection of the generator.

In this way, it is possible to avoid an excessive increase in the rotation speed of the wind turbine rotor, and to quickly adjust the rotation speed of the wind turbine rotor to the target rotation speed suitable for connection of the generator. Further, as compared to connection in midst of an increase of the rotation speed, connection at a rotation speed controlled to be constant is relatively easy, which makes it possible to reduce the risk of connection failure.

(2) In some embodiments, in the above configuration (1), the pitch control part is configured to start a control of the pitch drive part in the constant rotation-speed control mode from when the wind turbine rotor is stopped.

With the above configuration (2), the pitch drive part is controlled in the constant rotation-speed control mode from the time of start to the time of connection of the wind turbine rotor, which makes it possible to increase the rotation speed of the wind turbine rotor to the target rotation speed quickly by a simplified control.

(3) In some embodiments, in the above configuration (1), the pitch control part is configured to control the pitch drive part so that the pitch angle changes in accordance with a predetermined pitch schedule from when the wind turbine rotor is stopped until when the rotation speed reaches a first rotation-speed threshold value smaller than the target rotation speed, and control the pitch drive part in the constant rotation-speed control mode when the rotation speed reaches the first rotation-speed threshold value or higher.

With the above configuration (3), the pitch drive part is controlled in accordance with the predetermined pitch schedule from the time when the wind turbine rotor is started until the time when the rotation speed of the wind turbine rotor reaches the first rotation-speed threshold value, which makes it possible to increase the rotation speed of the wind turbine rotor securely by setting a suitable pitch schedule in accordance with wind-speed conditions or the like of the wind turbine power generating apparatus.

(4) In an embodiment, in the above configuration (3), the pitch schedule is configured such that the pitch angle is changed at at least one pitch rate toward a fine side to reach a standby pitch angle, and when the pitch angle reaches the standby pitch angle, the pitch angle is maintained to be constant at the standby pitch angle until the rotation speed of the wind turbine rotor reaches a second rotation-speed threshold value smaller than the first rotation-speed threshold value.

With the above configuration (4), the pitch angle is maintained to be a standby pitch angle, and secure follow-up of the rotation speed of the wind turbine rotor is confirmed. Thus, it is possible to prevent a follow-up delay of the wind turbine rotor with respect to a change in the pitch angle, and to increase the rotation speed of the wind turbine rotor to the target rotation speed more securely.

(5) In another embodiment, in the above configuration (4), the pitch schedule is configured such that the pitch angle is changed at at least one pitch rate toward the fine side from the standby pitch angle when the rotation speed of the wind turbine rotor reaches the second rotation-speed threshold value.

With the above configuration (5), after confirming secure follow-up of the rotation speed of the wind turbine rotor, the pitch angle is further changed in accordance with the pitch rate. Thus, it is possible to increase the rotation speed of the wind turbine rotor to the target rotation speed securely and quickly.

(6) In some embodiments, in any one of the above configurations (1) to (5), the controller further includes a startup-condition determination part configured to determine whether a startup condition of the wind turbine power generating apparatus is satisfied, the startup condition including that a parameter representing a wind speed of wind acting on the wind turbine power generating apparatus is at least a first wind-speed threshold value.

With the above configuration (6), control of the wind turbine rotor is started if the startup condition of the wind turbine power generating apparatus is satisfied, the startup condition including that a parameter representing a wind speed of wind acting on the wind turbine power generating apparatus is at least the first wind speed threshold value. In this way, it is possible to start the wind turbine power generating apparatus at an appropriate timing.

(7) In some embodiments, in the above configuration (6), the pitch control part is configured to control the pitch drive part in the constant rotation-speed control mode if the parameter is at least a second wind-speed threshold value smaller than the first wind-speed threshold value, and, if the pitch angle has reached a limit value of the fine side and the parameter is less than the second wind-speed threshold value, perform at least one of: changing the pitch angle to a feather side; or changing the pitch angle to the feather side and then maintaining the pitch angle at a standby pitch angle between a full-feather pitch angle and a full-fine pitch angle.

With the above configuration (7), the wind turbine rotor is continuously rotated using scarce wind energy even if the wind speed is low, which makes it possible to prevent inertia energy of the wind turbine rotor from dissipating. Thus, when a sufficient wind speed has recovered, it is possible to increase the rotation speed of the wind turbine rotor to the target rotation speed quickly and efficiently.

(8) In some embodiments, in any one of the above configurations (1) to (7), the controller further includes a synchronization determination part configured to, if the connection command from the connection command generation part is received, determine whether a difference between a voltage, a phase, and a frequency of the generator and a voltage, a phase, and a frequency of the utility grid is within a synchronization-enabled range, and the circuit breaker is configured to be closed if the synchronization determination part determines that the difference is within the synchronization-enabled range.

With the above configuration (8), the generator is connected when the voltage, phase, and frequency of the generator are at appropriate values. Thus, it is possible to prevent negative influence of connection of the generator on the grid, which enables smooth connection of the wind turbine power generating apparatus.

(9) In some embodiments, in any one of the above configurations (1) to (8), the controller is configured to, while the wind turbine power generating apparatus is operated in a warm-up operation mode, control the wind turbine power generating apparatus in the warm-up operation mode to rotate the wind turbine rotor with no load without outputting the connection command from the connection-command generating part.

With the above configuration (9), in the warm-up operation mode for the wind turbine power generating apparatus, the generator is not connected to the grid, and the wind turbine rotor is rotated with no load, using the rotational energy of the wind turbine rotor for warm-up operation. In this way, it is possible to perform warm-up operation of the wind turbine power generating apparatus smoothly.

(10) In some embodiments, in the above configuration (9), the wind turbine power generating apparatus further comprises a drivetrain for transmitting rotation of the wind turbine rotor to the generator. The drivetrain comprises: a hydraulic pump configured to be driven by rotation of the wind turbine rotor and to produce pressurized oil by pressurizing working oil; a hydraulic motor configured to drive the generator using the pressurized oil supplied from the hydraulic pump; a high-pressure line and a low-pressure line disposed between the hydraulic pump and the hydraulic motor; a bypass line connected to the high-pressure line and the low-pressure line so as to bypass the hydraulic motor; and a bypass valve for controlling a flow of the working oil in the bypass line. The controller is configured to open the bypass valve to guide the working oil in the high-pressure line to the low-pressure line not via the hydraulic motor, while the wind turbine power generating apparatus is operated in the warm-up operation mode.

With the above configuration (10), in the warm-up operation of the wind turbine power generating apparatus, rotational energy of the wind turbine rotor is converted into pressure energy by the hydraulic pump, and the working oil in the high-pressure line generated by the hydraulic pump is guided to the low-pressure line not via the hydraulic pump. Thus, pressure energy of high-pressure pressurized oil can be used as thermal energy for the warm-up operation, not for work in the hydraulic motor. Further, in the above configuration, it is possible to convert rotational energy of the wind turbine rotor into thermal energy using the existing equipment.

(11) A method of starting a wind turbine power generating apparatus, according to some embodiment of the present disclosure, is for a wind turbine power generating apparatus comprising: a wind turbine rotor including at least one blade; a pitch drive part for changing a pitch angle of the at least one blade; a generator configured to be driven by rotational energy of the wind turbine rotor; and a circuit breaker for switching a connection state of the generator with respect to a utility grid, and comprises: a pitch control step of controlling the pitch drive part in a constant rotation-speed control mode for limiting a change rate of the pitch angle to be not greater than an upper limit value and maintaining a rotation speed of the wind turbine rotor at a target rotation speed corresponding to a connection generator rotation speed, before the rotation speed of the wind turbine rotor reaches the target rotation speed, and a connection-command generation step of providing the circuit breaker with a connection command to connect the generator to the utility grid while the rotation speed of the wind turbine rotor is maintained at the target rotation speed.

According to the above method (11), it is possible to avoid an excessive increase in the rotation speed of the wind turbine rotor, and to quickly adjust the rotation speed of the wind turbine rotor to a target rotation speed suitable for connection of the generator. Further, as compared to connection in midst of an increase of the rotation speed, connection at a rotation speed controlled to be constant is relatively easy, which makes it possible to reduce the risk of connection failure.

(12) In some embodiments, in the above method (11), the pitch control step comprises starting a control of the pitch drive part in the constant rotation-speed control mode from when the wind turbine rotor is stopped.

According to the above method (12), the pitch drive part is controlled in the constant rotation-speed control mode from the time of start to the time of connection of the wind turbine rotor, which makes it possible to increase the rotation speed of the wind turbine rotor to the target rotation speed quickly by a simplified control.

(13) In some embodiments, in the above method (11), the pitch control step comprises controlling the pitch drive part so that the pitch angle changes in accordance with a predetermined pitch schedule from when the wind turbine rotor is stopped until when the rotation speed reaches a first rotation-speed threshold value smaller than the target rotation speed, and controlling the pitch drive part in the constant rotation-speed control mode when the rotation speed is at least the first rotation-speed threshold value.

According to the above method (13), the pitch drive part is controlled in accordance with the predetermined pitch schedule from the time when the wind turbine rotor is started until the time when the rotation speed of the wind turbine rotor reaches the first rotation-speed threshold value, which makes it possible to increase the rotation speed of the wind turbine rotor securely by setting a suitable pitch schedule in accordance with wind-speed conditions or the like of the wind turbine power generating apparatus.

(14) In some embodiments, in the above method (13), the method further comprises a startup-condition determination step of determining whether a startup condition of the wind turbine power generating apparatus is satisfied, the startup condition including that a parameter representing a wind speed of wind acting on the wind turbine power generating apparatus is at least a first wind-speed threshold value.

According to the above method (14), control of the wind turbine rotor is started if the startup condition of the wind turbine power generating apparatus is satisfied, the startup condition including that a parameter representing a wind speed of wind acting on the wind turbine power generating apparatus is at least the first wind speed threshold value. In this way, it is possible to start the wind turbine power generating apparatus at an appropriate timing.

(15) In some embodiments, in the above method (14), the pitch control step comprises controlling the pitch drive part in the constant rotation-speed control mode if the parameter is at least a second wind-speed threshold value smaller than the first wind-speed threshold value, and, if the pitch angle has reached a limit value of the fine side and the parameter is less than the second wind-speed threshold value, performing at least one of: changing the pitch angle to a feather side; or changing the pitch angle to the feather side and then maintaining the pitch angle at a standby pitch angle between a full-feather pitch angle and a full-fine pitch angle.

According to the above method (15), the wind turbine rotor is continuously rotated using scarce wind energy even if the wind speed is low, which makes it possible to prevent inertia energy of the wind turbine rotor from dissipating. Thus, when a sufficient wind speed has recovered, it is possible to increase the rotation speed of the wind turbine rotor to the target rotation speed quickly and efficiently.

According to at least some embodiments of the present disclosure, it is possible to increase the rotation speed of the wind turbine rotor quickly to the target rotation speed, and to reduce the risk of failure in connecting the generator to the utility grid.

### BRIEF DESCRIPTION OF DRAWINGS

FIG. 1 is a block diagram of a schematic configuration of a wind turbine power generating apparatus according to an embodiment.
FIG. 2 is a time chart showing a time-series change of each parameter of a wind turbine power generating apparatus according to an embodiment.
FIG. 3 is a time chart showing a time-series change of each parameter of a wind turbine power generating apparatus according to another embodiment.
FIG. 4 is a configuration diagram of a hydraulic transmission according to an embodiment.
FIG. 5 is a flowchart schematically showing a method of starting a wind turbine power generating apparatus according to an embodiment.
FIG. 6 is a flowchart showing a specific example of a method of starting a wind turbine power generating apparatus according to an embodiment.

### DETAILED DESCRIPTION

Embodiments of the present invention will now be described with reference to the accompanying drawings. It is intended, however, that unless particularly specified, dimensions, materials, shapes, relative positions and the like of components described in the embodiments shall be interpreted as illustrative only and not intended to limit the scope of the present invention unless particularly specified.

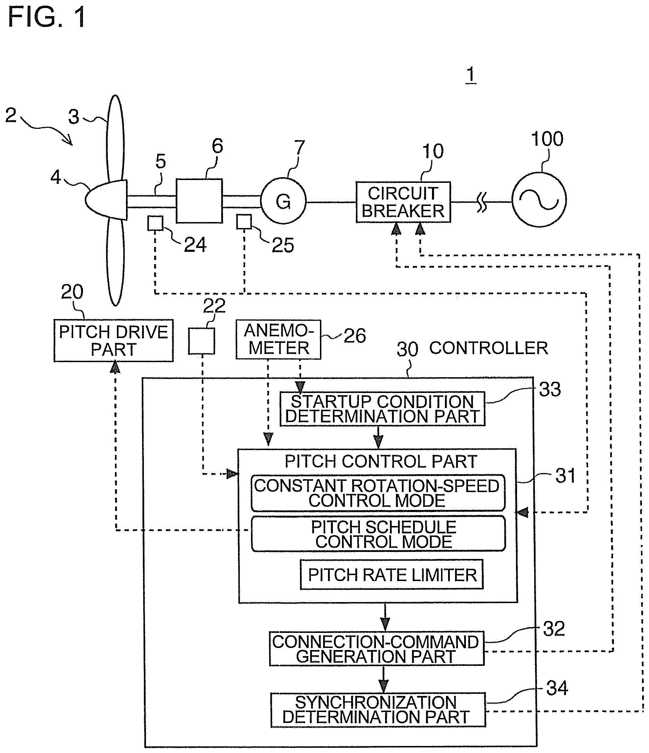

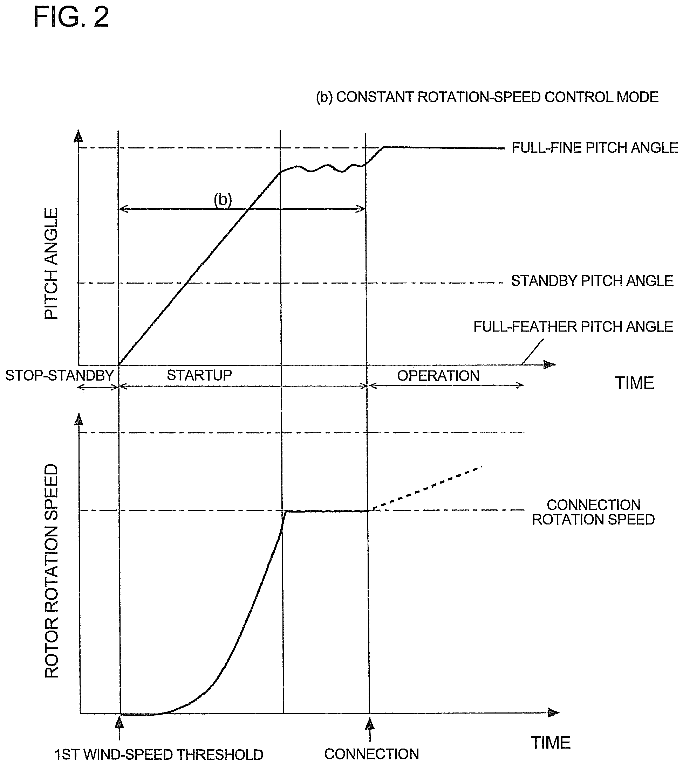

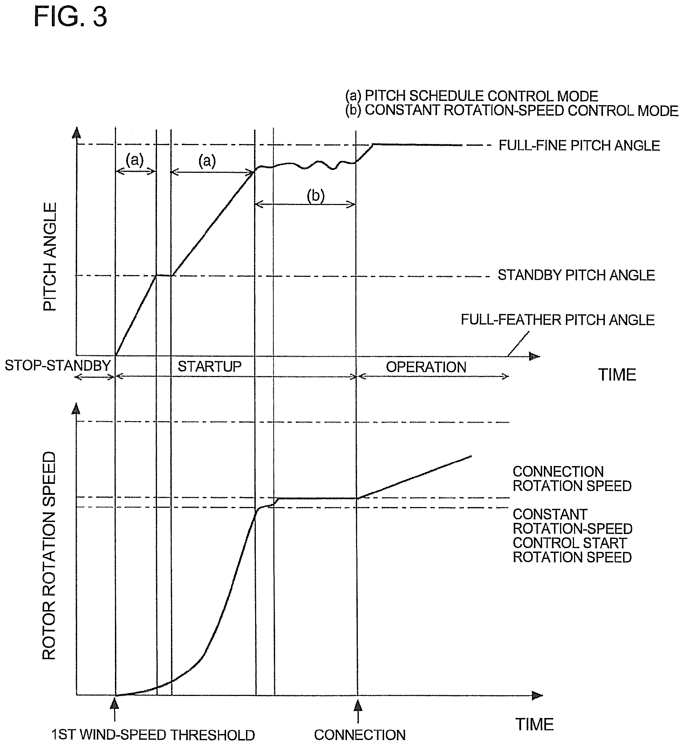

Firstly, with reference to FIGs. 1 to 3, the overall configuration of a wind turbine power generating apparatus 1 according to some embodiments will be described. FIG. 1 is a block diagram of a schematic configuration of the wind turbine power generating apparatus 1 according to an embodiment. FIG. 2 is a time chart showing a time-series change of each parameter of a wind turbine power generating apparatus according to an embodiment. FIG. 3 is a time chart showing a time-series change of each parameter of a wind turbine power generating apparatus according to another embodiment.

As illustrated in FIG. 1, the wind turbine power generating apparatus 1 according to some embodiments is configured to generate electric power from wind energy. More specifically, the wind turbine power generating apparatus 1 is provided as a power source of a dispersed power system and configured to be connectible to a grid (utility grid) 100. The wind turbine power generating apparatus 1 may be an offshore wind turbine power generating apparatus or an onshore wind turbine power generating apparatus.

In some embodiments, the wind turbine power generating apparatus 1 includes a wind turbine rotor 2, a pitch drive part 20, a generator 7, a circuit breaker 10, and a controller 30.

Further, the wind turbine power generating apparatus 1 may include at least one of a pitch-angle sensor 22 for detecting the pitch angle of at least one blade 3 of the wind turbine rotor 2, a rotation-speed sensor 24 for detecting a rotation speed of the wind turbine rotor 2 (rotor rotation speed), a rotation-speed sensor 25 for detecting a rotation speed of the generator 7 (generator rotation speed), or an anemometer 26 for measuring a wind speed in the vicinity of the wind turbine rotor 2. Further, as the rotor rotation speed and the generator rotation speed correspond to each other, either one may be used in a control. In the following embodiments, a control using mainly the rotor rotation speed will be described. However, in an actual control, the generator rotation speed may be used instead of the rotor rotation speed.

The wind turbine rotor 2 includes the at least one blade 3. The wind turbine rotor 2 may include a part which rotates integrally with the at least one blade 3 when the at least one blade 3 receives wind. For instance, the wind turbine rotor 2 includes a plurality of blades 3 radially mounted to a hub 4, and is configured such that the blades 3 and the hub 4 integrally rotate in response to wind received by the blades 3. The wind turbine rotor 2 may further include a main shaft 5 connected to the hub 4, in addition to the blades 3 and the hub 4.

The pitch drive part 20 is configured to change the pitch angle of the blades 3. Specifically, the pitch drive part 20 is a pitch actuator for changing the pitch angle of the blades 3 on the basis of a pitch command of the pitch control part 31 described below. For instance, the pitch drive part 20 may be a mechanical actuator such as a hydraulic cylinder and a pneumatic cylinder, or an electric actuator such as a servo motor.

Further, the pitch drive part 20 may be disposed inside the hub 4. In a case in which the wind turbine rotor 2 has a plurality of blades 3, the pitch drive part 20 may be disposed on each of the plurality of blades 3.

The generator 7 is configured to be driven by rotational energy of the wind turbine rotor 2. The generator 7 may be an induction generator or a synchronous generator.

As illustrated in FIG. 1, a drivetrain 6 may be disposed between the wind turbine rotor 2 and the generator 7. The drivetrain 6 may be a gear-type speed increaser, or a hydraulic transmission 60 described below, for instance. Alternatively, the wind turbine rotor 2 and the generator 7 may be coupled directly to each other (not illustrated).

The circuit breaker 10 is configured to switch a connection state of the generator 7 to a utility grid 100. The circuit breaker is controlled to open and close by a controller 30.

Further, between the generator 7 and the grid 100, an electric transformer for transforming electric power generated by the generator 7 or a power source switching board for switching a load current in normal time may be disposed.

The controller 30 is configured to control the wind turbine power generating apparatus 1.

In an embodiment, the controller 30 includes a pitch control part 31 and a connection-command generating part 32.

In the schematic diagram in FIG. 1, the controller 30 is depicted as a physically integrated object with a plurality of functions such as the pitch control part 31 and the connection-command generating part 32. However, the controller 30 may include a plurality of devices disposed physically distant from one another. For instance, although not illustrated, the controller 30 may include a WTC controller and a converter control device disposed in a nacelle, and a pitch controller disposed inside the hub 4.

The pitch control part 31 is configured to adjust the pitch angle of the blades 3 by controlling the pitch drive part 20. Specifically, the pitch control part 31 controls the pitch drive part 20 in a constant rotation-speed control mode (see the constant rotation-speed control mode (b) in FIGs. 2 and 3) for limiting a change rate of the pitch angle to be not greater than an upper limit value and maintaining the rotation speed of the wind turbine rotor 2 at a target rotation speed which corresponds to a connection rotation speed of the generator 7, before the rotation speed of the wind turbine rotor 2 reaches the target rotation speed. Further, the pitch control part 31 may control the pitch drive part 20 in accordance with a pitch schedule. A pitch schedule mode is a mode for changing the pitch angle from a feather side toward a fine side at one or more pitch rate set in advance, for instance. Further, the pitch control part 31 may include a pitch rate limiter for limiting a change rate of the pitch angle changing toward the fine side after connection of the generator 7 to be not greater than an upper limit value. In this way, before and after connection of the generator 7, over rotation of the generator 7 is prevented even under a condition of a high wind speed, which enables smooth power supply to the wind turbine power generating apparatus 1.

The connection-command generating part 32 provides the circuit breaker 10 with a connection command to connect the generator 7 to the utility grid 100 while the rotation speed of the wind turbine rotor 2 is maintained at a target rotation speed.

In the above configuration, the pitch control part 31 controls the pitch drive part 20 in the constant rotation-speed control mode for maintaining the rotation speed of the wind turbine rotor 2 at a target rotation speed, before connection of the generator 7.

In this way, it is possible to avoid an excessive increase in the rotation speed of the wind turbine rotor 2, and to quickly adjust the rotation speed of the wind turbine rotor 2 to a target rotation speed suitable for connection of the generator 7. Further, as compared to connection in midst of an increasing process of the rotation speed, connection at a rotation speed controlled to be constant is relatively easy, which makes it possible to reduce the risk of connection failure.

In some embodiments, as illustrated in FIG. 2, the pitch control part 31 is configured to start control of the pitch drive part 20 in the constant rotation-speed control mode from the time when the wind turbine rotor 2 is stopped.

According to the above configuration, the pitch drive part 20 is controlled in the constant rotation-speed control mode from the time of start to the time of connection of the wind turbine rotor 2, which makes it possible to increase the rotation speed of the wind turbine rotor 2 to the target rotation speed quickly by a simplified control.

In some other embodiments, as illustrated in FIG. 3, the pitch control part 31 is configured to control the pitch drive part so that the pitch angle changes in accordance with a predetermined pitch schedule from the time when the wind turbine rotor 2 is stopped until the time when the rotation speed reaches the first rotation-speed threshold value smaller than the target rotation speed, and to control the pitch drive part in the constant rotation-speed control mode if the rotation speed reaches at least the first rotation-speed threshold value.

With the above configuration, the pitch drive part 20 is controlled in accordance with the predetermined pitch schedule from the time when the wind turbine rotor 2 is started until the time when the rotation speed of the wind turbine rotor 2 reaches the first rotation-speed threshold value, which makes it possible to increase the rotation speed of the wind turbine rotor 2 securely by setting a suitable pitch schedule in accordance with wind-speed conditions or the like of the wind turbine power generating apparatus 1.

In this case, the pitch schedule is such that the pitch angle is changed at at least one pitch rate toward the fine side to reach a standby pitch angle, and if the pitch angle has reached the standby pitch angle, the pitch angle is maintained to be constant at the standby pitch angle until the rotation speed of the wind turbine rotor 2 reaches the second rotation-speed threshold value smaller than the first rotation-speed threshold value.

With the above configuration, the pitch angle is maintained to be a standby pitch angle, and secure follow-up of the rotation speed of the wind turbine rotor 2 is confirmed. Thus, it is possible to prevent a follow-up delay of the wind turbine rotor with respect to a change in the pitch angle, and to increase the rotation speed of the wind turbine rotor 2 to the target rotation speed more securely.

Further, in this case, the pitch schedule is such that the pitch angle is changed at at least one pitch rate toward the fine side from the standby pitch angle if the rotation speed of the wind turbine rotor 2 reaches the second rotation-speed threshold value.

With the above configuration, after confirming secure follow-up of the rotation speed of the wind turbine rotor 2, the pitch angle is further changed in accordance with the pitch rate. Thus, it is possible to increase the rotation speed of the wind turbine rotor 2 to the target rotation speed securely and quickly.

The above wind turbine power generating apparatus 1 may further include one of the following configurations.

In some embodiments, the controller 30 further includes at least one of a startup-condition determination part 33 or a synchronization determination part 34.

The startup-condition determination part 33 determines whether a startup condition of the wind turbine power generating apparatus 1 is satisfied, the startup condition including that a parameter representing a wind speed of wind acting on the wind turbine power generating apparatus 1 is at least the first wind speed threshold value.

With the above configuration, control of the wind turbine rotor is started if the startup condition of the wind turbine power generating apparatus 1 is satisfied, the startup condition including that a parameter representing a wind speed of wind acting on the wind turbine power generating apparatus 1 is at least the first wind speed threshold value. In this way, it is possible to start the wind turbine power generating apparatus 1 at an appropriate timing.

In this case, the pitch control part 31 controls the pitch drive part 20 in the constant rotation-speed control mode if the parameter is at least the second wind-speed threshold value smaller than the first wind speed threshold value. Further, the pitch control part 31 is configured to perform at least one of: changing the pitch angle to the feather side; or changing the pitch angle to the feather side and then maintaining the pitch angle to be a standby pitch angle between the full-feather pitch angle and the full-fine pitch angle, if the pitch angle has reached a limit value of the fine side and the parameter is less than the second wind speed threshold value.

With the above configuration, the wind turbine rotor 2 is continuously rotated using scarce wind energy even if the wind speed is low, which makes it possible to prevent inertia energy of the wind turbine rotor 2 from dissipating. Thus, when a sufficient wind speed has recovered, it is possible to increase the rotation speed of the wind turbine rotor 2 to the target rotation speed quickly and efficiently.

The synchronization determination part 34 is configured to determine whether a difference between the voltage, phase, and frequency of the generator 7 and the voltage, phase, and frequency of the grid 100 have fallen in a synchronization-enabled range, if a connection command from the connection-command generating part 32 is received.

The circuit breaker is configured to close if the synchronization determination part determines that the difference has fallen within the synchronization-enabled range.

With the above configuration, the generator 7 is connected when the voltage, phase, and frequency of the generator 7 are at appropriate values. Thus, it is possible to prevent negative influence of connection of the generator 7 on the grid 100, which enables smooth connection of the wind turbine power generating apparatus 1.

In some embodiments, the controller 30 is configured to control the wind turbine power generating apparatus 1 is controlled in a warm-up operation mode in which the wind turbine rotor 2 is rotated with no load without outputting a connection command from the connection-command generating part 32, while the wind turbine power generating apparatus 1 is operated in the warm-up operation mode. After being controlled in the warm-up operation mode, the wind turbine power generating apparatus 1 is operated to prepare conditions for connection.

With the above configuration, in the warm-up operation mode for the wind turbine power generating apparatus 1, the generator 7 is not connected to the grid 100, and the wind turbine rotor 2 is rotated with no load, using the rotational energy of the wind turbine rotor 2 for warm-up operation. In this way, it is possible to perform warm-up operation of the wind turbine power generating apparatus 1 smoothly.

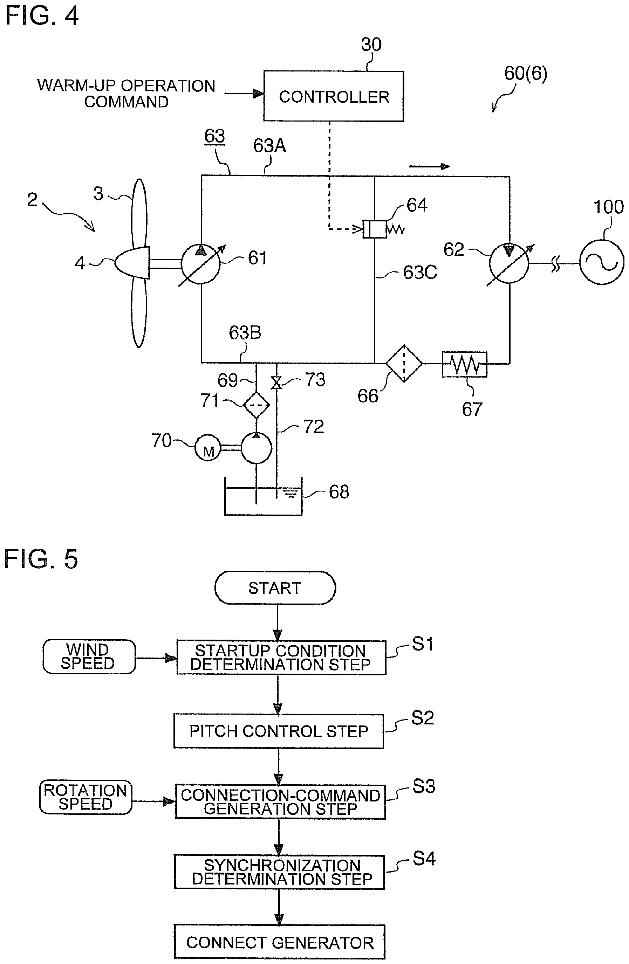

The warm-up operation mode can be carried out using the existing configuration of the hydraulic transmission 60 illustrated in FIG. 4.

FIG. 4 is a configuration diagram of the hydraulic transmission 60 according to an embodiment.

The hydraulic transmission 60 is a kind of drivetrain 6 (see FIG. 1) for transmitting rotation of the wind turbine rotor 2 to the generator 7.

In some embodiments, the hydraulic transmission 60 includes a hydraulic pump 61, a hydraulic motor 62, and a hydraulic line 63.

The hydraulic pump 61 is configured to be driven by rotation of the wind turbine rotor 2 to pressurize working oil, thereby producing pressurized oil.

The hydraulic motor 62 is configured to drive the generator 7 using pressurized oil supplied from the hydraulic pump 61.

The hydraulic line 63 includes a high-pressure line 63A and a low-pressure line 63B disposed between the hydraulic pump 61 and the hydraulic motor 62, and a bypass line 63C connected to the high-pressure line 63A and the low-pressure line 63B so as to bypass the hydraulic motor 62. A bypass valve 64 for controlling a flow of the working oil is disposed in the bypass line 63C.

The bypass line 63C and the bypass valve 64 are normally disposed to keep a pressure of working oil (pressurized oil) of the high-pressure line 63A at a set pressure or below. That is, if a pressure in the high-pressure line 63A increases to the set pressure of the bypass valve 64, the bypass valve 64 automatically opens, and discharges the pressurized oil to the low-pressure line 63B via the bypass line 63C.

In an embodiment, the bypass line 63C and the bypass valve 64 are used to convert pressure energy of the working oil to thermal energy in the warm-up operation mode. In this case, the bypass valve 64 may be a solenoid valve which is controllable to open and close regardless of the magnitude of a differential pressure in the warm-up operation mode.

The discharge side of the hydraulic pump 61 is connected to the inlet side of the hydraulic motor 62 via the high-pressure line 63A, and the inlet side of the hydraulic pump 61 is connected to the discharge side of the hydraulic motor 62 via the low-pressure line 63B. Pressurized oil discharged from the hydraulic pump 61 flows into the hydraulic motor 62 via the high-pressure line 63A and drives the hydraulic motor 62. The working oil (low-pressure oil) having performed work in the hydraulic motor 62 flows into the hydraulic pump 61 via the low-pressure line 63B, is pressurized by the hydraulic pump 61, and flows again into the hydraulic motor 62 via the high-pressure line 63A.

Further, the controller 30 is configured to open the bypass valve 64 to guide pressurized oil in the high-pressure line 63A to the low-pressure line 63B not via the hydraulic motor 62, while the wind turbine power generating apparatus is operated in the warm-up operation mode (in response to a warm-up operation command, for instance).

With this configuration, in the warm-up operation of the wind turbine power generating apparatus 1, rotational energy of the wind turbine rotor 2 is converted into pressure energy by the hydraulic pump 61, and then the working oil in the high-pressure line 63A generated by the hydraulic pump 61 is guided to the low-pressure line 63B not via the hydraulic motor 62. Thus, pressure energy of high-pressure pressurized oil can be used as thermal energy for the warm-up operation, not for work in the hydraulic motor. Further, in the above configuration, it is possible to convert rotational energy of the wind turbine rotor 2 into thermal energy using the existing equipment.

Further, the low-pressure line 63B may include an oil filter 66 for removing impurity substances in the working oil and an oil cooler 67 for cooling the working oil. Further, the oil cooler 67 may be disposed on the upstream side (the side of the hydraulic motor 62) of a joint between the bypass line 63C and the low-pressure line 63B, so as not to use thermal energy flowing in from the bypass line 63C during warm-up operation. Alternatively, an oil cooler (heat exchanger) may be disposed on the downstream side (the side of the hydraulic pump 61) of a joint between the bypass line 63C and the low-pressure line 63B, and thermal energy recovered by the oil cooler 67 may be used for warm-up operation.

A pulsation-prevention accumulator (not illustrated) may be disposed in the high-pressure line 63A or the low-pressure line 63B.

Further, the hydraulic transmission 60 may include an oil tank 68, a supplementing line 69, a boost pump 70, an oil filter 71, a return line 72, and a low-pressure relief valve 73.

All or a part of a return flow from the hydraulic motor 62 may flow through one or more of the above units.

In another embodiment, if a speed increaser of gear type is used as the drivetrain 6, in the warm-up operation, oil may be stirred inside the speed increaser connected to the main shaft 5 to covert wind energy into thermal energy without extracting wind energy from the generator 7 as generation power.

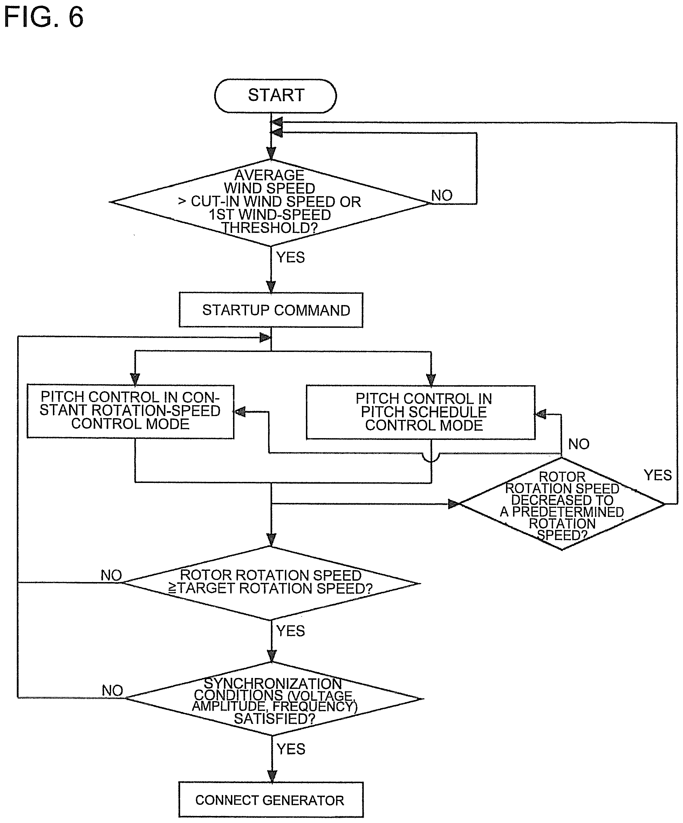

Next, with reference to FIGs. 5 and 6, a method of starting the wind turbine power generating apparatus 1 according to some embodiments will be described. FIG. 5 is a flowchart schematically showing a method of starting a wind turbine power generating apparatus according to an embodiment. FIG. 6 is a flowchart showing a specific example of a method of starting a wind turbine power generating apparatus according to an embodiment. In the following description, the reference signs illustrated in FIG. 1 will be used where appropriate.

As described above, the wind turbine power generating apparatus 1 includes the wind turbine rotor 2 including the at least one blade 3, the pitch drive part 20 for changing the pitch angle of the at least one blade 3, the generator 7 configured to be driven by rotational energy of the wind turbine rotor 2, and the circuit breaker 10 for switching a connection state of the generator 7 to the utility grid 100.

The method of starting the wind turbine power generating apparatus 1 according to some embodiments includes a pitch control step S2 and a connection-command generation step S3.

Further, the method of starting the wind turbine power generating apparatus 1 may further include at least one of a startup-condition determination step S1 or a synchronization determination step S4.

In the startup-condition determination step S1, it is determined whether the startup condition of the wind turbine power generating apparatus is satisfied, the startup condition including that a parameter representing a wind speed of wind acting on the wind turbine power generating apparatus 1 is at least the first wind speed threshold value. For instance, the wind turbine power generating apparatus 1 is started if a mean value (mean wind speed) in the predetermined time of wind speed measured by the anemometer 26 is greater than a startup wind speed set in advance. Accordingly, a control of the wind turbine rotor 2 is started if the startup condition of the wind turbine power generating apparatus 1 is satisfied, the startup condition including that a parameter representing a wind speed of wind acting on the wind turbine power generating apparatus 1 is at least the first wind speed threshold value. In this way, it is possible to start the wind turbine power generating apparatus 1 at an appropriate timing.

In the pitch control step S2, the pitch drive part 20 is controlled in a constant rotation-speed control mode for limiting a change rate of the pitch angle to be not greater than an upper limit value and maintaining the rotation speed and the rotation speed of the wind turbine rotor 2 is at a target rotation speed which corresponds to a connection rotation speed of the generator 7, before the rotation speed of the wind turbine rotor 2 reaches the target rotation speed.

In the connection-command generation step S3, the circuit breaker 10 is provided with a connection command to connect the generator 7 to the utility grid 100 while the rotation speed of the wind turbine rotor 2 is maintained at a target rotation speed.

According to the above method, it is possible to avoid an excessive increase in the rotation speed of the wind turbine rotor 2, and to quickly adjust the rotation speed of the wind turbine rotor 2 to a target rotation speed suitable for connection of the generator. Further, as compared to connection in midst of an increasing process of the rotation speed, connection at a rotation speed controlled to be constant is relatively easy, which makes it possible to reduce the risk of connection failure.

In an embodiment, as illustrated in FIG. 2, in the pitch control step S2, a control of the pitch drive part 20 in the constant rotation-speed control mode is started from when the wind turbine rotor 2 is stopped.

According to the above method, the pitch drive part 20 is controlled in the constant rotation-speed control mode from the time of start to the time of connection of the wind turbine rotor 2, which makes it possible to increase the rotation speed of the wind turbine rotor 2 to the target rotation speed quickly by a simplified control.

In another embodiment, as illustrated in FIG. 3, in the pitch control step S2, the pitch drive part 20 is controlled so that the pitch angle changes in accordance with a predetermined pitch schedule from the time when the wind turbine rotor 2 is stopped until when the rotation speed reaches the first rotation-speed threshold value smaller than the target rotation speed, and to control the pitch drive part 20 in the constant rotation-speed control mode if the rotation speed is at least the first rotation-speed threshold value.

According to the above method, the pitch drive part 20 is controlled in accordance with the predetermined pitch schedule from the time when the wind turbine rotor 2 is started until when the rotation speed of the wind turbine rotor 2 reaches the first rotation-speed threshold value, which makes it possible to increase the rotation speed of the wind turbine rotor 2 securely by setting a suitable pitch schedule in accordance with wind-speed conditions or the like of the wind turbine power generating apparatus 1.

In an embodiment, in the pitch control step S2, if the parameter is at least the second wind-speed threshold value smaller than the first wind-speed threshold value, the pitch drive part 20 is controlled in the constant rotation-speed control mode. If the pitch angle has reached a limit value of the fine side and the parameter is less than the second wind speed threshold value, at least one of the following is performed: changing the pitch angle to the feather side; or changing the pitch angle to the feather side and then maintaining the pitch angle to be the standby pitch angle between the full-feather pitch angle and the full-fine pitch angle.

According to the above method, the wind turbine rotor 2 is continuously rotated using scarce wind energy even if the wind speed is low, which makes it possible to prevent inertia energy of the wind turbine rotor 2 from dissipating. Thus, when a sufficient wind speed has recovered, it is possible to increase the rotation speed of the wind turbine rotor 2 to the target rotation speed quickly and efficiently.

FIG. 6 is a flowchart specifically showing a method of starting a wind turbine power generating apparatus 1 according to an embodiment. The method will be described with reference to FIGs. 2 or 3 where appropriate.

First, in the startup-condition determination step S1 (see FIG. 5) in a standby state, it is determined whether a mean wind speed in a predetermined time of wind speed measured by the anemometer 26 is at least a cut-in wind speed or the first wind-speed threshold value.

If the mean wind speed is at least the cut-in wind speed or the first wind-speed threshold value, a startup command to start the wind turbine power generating apparatus 1 is issued, and the standby state shifts to a startup state.

In the startup state, the pitch drive part 20 is controlled in the constant rotation-speed control mode (b) as illustrated in FIG. 2 to change the pitch angle, or the pitch drive part 20 is controlled in the pitch-schedule control mode as illustrated in FIG. 3 to change the pitch angle. In this way, the pitch angle of the blades 3 changes from the feather side to the fine side.

Then, it is determined whether the rotor rotation speed is greater than a target rotation speed (e.g. a connection rotation speed or a rotation speed close to the connection rotation speed), and if the rotor rotation speed is at least the target rotation speed, it is determined whether a difference between the voltage, phase, and frequency of the generator 7 and the voltage, phase, and frequency of the grid 100 has fallen in the synchronization-enabled range. If the generator 7 and the grid 100 are synchronized, the generator 7 is connected to the grid 100.

In contrast, if the rotor rotation speed is lower than the target rotation speed, it is further determined whether the rotor rotation speed has decreased to a predetermined rotation speed. If the rotor rotation speed has decreased to the predetermined rotation speed, the state shifts to the standby state. If the rotor rotation speed has not decreased to the predetermined rotation speed, the startup state is continued.

As described above, it is possible to increase the rotation speed of the wind turbine rotor 2 quickly to the target rotation speed, and to reduce the risk of failure in connecting the generator 7 to the utility grid 100.

Embodiments of the present invention were described in detail above, but the present invention is not limited thereto, and various amendments and modifications may be implemented within a scope that does not depart from the present invention. For instance, some of the above embodiments may be combined. The protection scope is defined by the patent claims.

## Claims

1. A wind turbine power generating apparatus (1) for generating electric power from wind energy, comprising:
a wind turbine rotor (2) including at least one blade (3);
a pitch drive part (20) for changing a pitch angle of the at least one blade (3);
a generator (7) configured to be driven by rotational energy of the wind turbine rotor (2);
a circuit breaker (10) for switching a connection state of the generator (7) with respect to a utility grid (100); and
a controller (30) for controlling the wind turbine power generating apparatus (1), the controller (30) including
a pitch control part (31) configured to control the pitch drive part (20) in a constant rotation-speed control mode for limiting a change rate of the pitch angle to be not greater than an upper limit value, before a rotation speed of the wind turbine rotor (2) reaches a target rotation speed corresponding to a connection rotation speed of the generator (7), and maintaining the rotation speed of the wind turbine rotor (2) at the target rotation speed, and
a connection-command generation part (32) configured to provide the circuit breaker (10) with a connection command to connect the generator (7) to the utility grid (100) while the rotation speed of the wind turbine rotor (2) is maintained at the target rotation speed, wherein the pitch control part (31) is configured to
control the pitch drive part (20) so that the pitch angle changes in accordance with a predetermined pitch schedule from when the wind turbine rotor (2) is stopped until when the rotation speed reaches a first rotation-speed threshold value smaller than the target rotation speed, and
control the pitch drive part (20) in the constant rotation-speed control mode when the rotation speed reaches the first rotation-speed threshold value or higher,
wherein the pitch schedule is configured such that the pitch angle is changed at at least one pitch rate toward a fine side to reach a standby pitch angle, and when the pitch angle reaches the standby pitch angle, the pitch angle is maintained to be constant at the standby pitch angle until the rotation speed of the wind turbine rotor (2) reaches a second rotation-speed threshold value smaller than the first rotation-speed threshold value,
**characterized in that**
the pitch schedule is configured such that the pitch angle is changed at at least one pitch rate toward the fine side from the standby pitch angle when the rotation speed of the wind turbine rotor (2) reaches the second rotation-speed threshold value.

2. The wind turbine power generating apparatus (1) according to claim 1,
wherein the controller (30) further includes a startup-condition determination part (33) configured to determine whether a startup condition of the wind turbine power generating apparatus (1) is satisfied, the startup condition including that a parameter representing a wind speed of wind acting on the wind turbine power generating apparatus (1) is at least a first wind-speed threshold value.

3. The wind turbine power generating apparatus (1) according to claim 2,
wherein the pitch control part (31) is configured to
control the pitch drive part (20) in the constant rotation-speed control mode if the parameter is not less than a second wind-speed threshold value which is smaller than the first wind-speed threshold value, and
if the pitch angle has reached a limit value of the fine side and the parameter is less than the second wind-speed threshold value, perform: changing the pitch angle to a feather side.

4. The wind turbine power generating apparatus (1) according to any one of claims 1 to 3,
wherein the controller (30) further includes a synchronization determination part (34) configured to, if the connection command from the connection command generation part is received, determine whether a difference between a voltage, a phase, and a frequency of the generator (7) and a voltage, a phase, and a frequency of the utility grid (100) is within a synchronization-enabled range, and
wherein the circuit breaker (10) is configured to be closed if the synchronization determination part (32) determines that the difference is within the synchronization-enabled range.

5. The wind turbine power generating apparatus (1) according to any one of claims 1 to 4,
wherein the controller (30) is configured to, while the wind turbine power generating apparatus (1) is operated in a warm-up operation mode, control the wind turbine power generating apparatus (1) in the warm-up operation mode to rotate the wind turbine rotor (2) with no load without outputting the connection command from the connection-command generating part.

6. The wind turbine power generating apparatus (1) according to claim 5, further comprising a drivetrain (60) for transmitting rotation of the wind turbine rotor (2) to the generator (7),
wherein the drivetrain (60) comprises
a hydraulic pump (61) configured to be driven by rotation of the wind turbine rotor (2) and to produce pressurized oil by pressurizing working oil;
a hydraulic motor (62) configured to drive the generator using the pressurized oil supplied from the hydraulic pump (61);
a high-pressure line (63A) and a low-pressure line (63B) disposed between the hydraulic pump (61) and the hydraulic motor (62);
a bypass line (63C) connected to the high-pressure line (63A) and the low-pressure line (63B) so as to bypass the hydraulic motor (62); and
a bypass valve (64) for controlling a flow of the working oil in the bypass line (63C), and
wherein the controller (30) is configured to open the bypass valve (64) to guide the working oil in the high-pressure line (63A) to the low-pressure line (63B) not via the hydraulic motor (62), while the wind turbine power generating apparatus (1) is operated in the warm-up operation mode.

7. A method of starting a wind turbine power generating apparatus (1) comprising: a wind turbine rotor (2) including at least one blade (3); a pitch drive part (20) for changing a pitch angle of the at least one blade (3); a generator (7) configured to be driven by rotational energy of the wind turbine rotor (2); and a circuit breaker (10) for switching a connection state of the generator (7) with respect to a utility grid (100), the method comprising:
a pitch control step of controlling the pitch drive part (20) in a constant rotation-speed control mode for limiting a change rate of the pitch angle to be not greater than an upper limit value before a rotation speed of the wind turbine rotor (2) reaches a target rotation speed corresponding to a connection rotation speed of the generator (7), and maintaining the rotation speed of the wind turbine rotor (2) at the target rotation speed, and
a connection-command generation step of providing the circuit breaker (10) with a connection command to connect the generator (2) to the utility grid (100) while the rotation speed of the wind turbine rotor (2) is maintained at the target rotation speed,
wherein the pitch control step comprises
controlling the pitch drive part so that the pitch angle changes in accordance with a predetermined pitch schedule from when the wind turbine rotor (2) is stopped until when the rotation speed reaches a first rotation-speed threshold value smaller than the target rotation speed, and
controlling the pitch drive part in the constant rotation-speed control mode when the rotation speed is at least the first rotation-speed threshold value,
wherein the pitch schedule is configured such that the pitch angle is changed at at least one pitch rate toward a fine side to reach a standby pitch angle, and when the pitch angle reaches the standby pitch angle, the pitch angle is maintained to be constant at the standby pitch angle until the rotation speed of the wind turbine rotor (2) reaches a second rotation-speed threshold value smaller than the first rotation-speed threshold value,
**characterized in that**
the pitch schedule is configured such that the pitch angle is changed at at least one pitch rate toward the fine side from the standby pitch angle when the rotation speed of the wind turbine rotor (2) reaches the second rotation-speed threshold value.

8. The method of starting a wind turbine power generating apparatus (1) according to any one of claims 7, further comprising
a startup-condition determination step of determining whether a startup condition of the wind turbine power generating apparatus (1) is satisfied, the startup condition including that a parameter representing a wind speed of wind acting on the wind turbine power generating apparatus is at least a first wind-speed threshold value.

9. The method of starting a wind turbine power generating apparatus (1) according to claim 8,
wherein the pitch control step comprises
controlling the pitch drive part (20) in the constant rotation-speed control mode if the parameter is not less than a second wind-speed threshold value which is smaller than the first wind-speed threshold value, and
if the pitch angle has reached a limit value of the fine side and the parameter is less than the second wind-speed threshold value, performing: changing the pitch angle to a feather side.

## Patentansprüche

1. Windturbinen-Energieerzeugungsvorrichtung (1) zum Erzeugen von elektrischer Energie aus Windenergie, umfassend:
einen Windturbinenrotor (2), der zumindest ein Rotorblatt (3) aufweist;
einen Neigungsantriebsteil (20) zum Ändern eines Neigungswinkels des zumindest einen Rotorblatts (3);
einen Generator (7), der so konfiguriert ist, dass er durch Rotationsenergie des Windturbinenrotors (2) angetrieben wird;
einen Schutzschalter (10) zum Schalten eines Verbindungszustands des Generators (7) in Bezug auf ein Versorgungsnetz (100); und
eine Steuerung (30) zum Steuern der Windturbinen-Energieerzeugungsvorrichtung (1), wobei die Steuerung (30) Folgendes aufweist
einen Neigungssteuerteil (31), der so konfiguriert ist, dass er das Neigungsantriebsteil (20) in einem konstanten Drehzahlregelungsmodus steuert, damit eine Änderungsrate des Neigungswinkels nicht größer als ein oberer Grenzwert ist, bevor eine Ausgangsleistung des Windturbinenrotors (2) eine Solldrehzahl erreicht, die einer Verbindungsdrehzahl des Generators (7) entspricht und die Drehzahl des Windturbinenrotors (2) bei der Solldrehzahl hält, und
einen Verbindungsbefehl-Erzeugungsteil (32), der so konfiguriert ist, dass er den Schutzschalter (10) mit einem Verbindungsbefehl zum Verbinden des Generators (7) mit dem Versorgungsnetz (100) bereitstellt, während die Drehzahl des Windturbinenrotors (2) bei der Solldrehzahl gehalten wird, wobei der Neigungssteuerteil (31) konfiguriert ist, zum
Steuern des Neigungsantriebsteils (20), so dass sich der Neigungswinkel gemäß einem vorbestimmten Neigungsplan ab dem Zeitpunkt ändert, ab dem der Windturbinenrotor (2) gestoppt wird, und dies bis zu dem Zeitpunkt, in dem die Drehzahl einen ersten Drehzahlschwellenwert erreicht, der kleiner als die Solldrehzahl ist, und
Steuern des Neigungsantriebsteils (20) im konstanten Drehzahlregelungsmodus, wenn die Drehzahl den ersten Drehzahlschwellenwert oder einen höheren Wert erreicht,
wobei der Neigungsplan so konfiguriert ist, dass der Neigungswinkel mit zumindest einer Neigungsrate in Richtung einer feinen Seite geändert wird, um einen Bereitschaftsneigungswinkel zu erreichen, und der Neigungswinkel so lange bei einem Bereitschaftsneigungswinkel konstant gehalten wird, bis die Drehzahl des Windturbinenrotors (2) einen zweiten Drehzahlschwellenwert erreicht, der kleiner als der erste Drehzahlschwellenwert ist,
**dadurch gekennzeichnet, dass**
der Neigungsplan so konfiguriert ist, dass der Neigungswinkel mit zumindest einer Neigungsrate in Richtung der feinen Seite aus dem Bereitschaftsneigungswinkel geändert wird, wenn die Drehzahl des Windturbinenrotors (2) den zweiten Drehzahlschwellenwert erreicht.

2. Windturbinen-Energieerzeugungsvorrichtung (1) nach Anspruch 1,
wobei die Steuerung (30) ferner einen Startup-Bedingungs-Bestimmungsteil (33) aufweist, der so konfiguriert ist, dass er bestimmt, ob eine Startbedingung der Windturbinen-Energieerzeugungsvorrichtung (1) erfüllt ist, wobei die Startbedingung einschließlich dessen, dass ein Parameter, der eine Windgeschwindigkeit des Windes darstellt, der auf die Windturbinen-Energieerzeugungsvorrichtung (1) wirkt, zumindest ein erster Windgeschwindigkeits-Schwellenwert ist.

3. Windturbinen-Energieerzeugungsvorrichtung (1) nach Anspruch 2,
wobei der Neigungssteuerteil (31) konfiguriert ist, zum
Steuern des Neigungsantriebsteils (20) im konstanten Drehzahlregelungsmodus, wenn der Parameter nicht kleiner als ein zweiter Windgeschwindigkeits-Schwellenwert ist, der kleiner als der erste Windgeschwindigkeits-Schwellenwert ist, und
wenn der Neigungswinkel einen Grenzwert der feinen Seite erreicht hat und der Parameter kleiner als der zweite Windgeschwindigkeits-Schwellenwert ist, folgende Schritte ausführen: Ändern des Neigungswinkels zu einer Federseite.

4. Windturbinen-Energieerzeugungsvorrichtung (1) nach einem der Ansprüche 1 bis 3,
wobei die Steuerung (30) ferner einen Synchronisations-Bestimmungsteil (34) aufweist, der so konfiguriert ist, dass er, wenn der Verbindungsbefehl vom Verbindungsbefehls-Erzeugungsteil empfangen wird, bestimmt, ob eine Differenz zwischen einer Spannung, einer Phase und einer Frequenz des Generators (7) und einer Spannung, einer Phase und einer Frequenz des Versorgungsnetzes (100) innerhalb eines synchronisationsfähigen Bereichs liegt, und
wobei der Schutzschalter (10) so konfiguriert ist, dass er geschlossen wird, wenn der Synchronisations-Bestimmungsteil (32) bestimmt, dass die Differenz im synchronisationsfähigen Bereich liegt.

5. Windturbinen-Energieerzeugungsvorrichtung (1) nach einem der Ansprüche 1 bis 4,
wobei die Steuerung (30) so konfiguriert ist, dass sie, während die Windturbinen-Energieerzeugungsvorrichtung (1) in einem Aufwärm-Betriebsmodus betrieben wird, die Windturbinen-Energieerzeugungsvorrichtung (1) im Aufwärmbetrieb steuert, um den Windturbinenrotor (2) ohne Last zu drehen, ohne den Verbindungsbefehl vom Verbindungsbefehl-Erzeugungsteil auszugeben.

6. Windturbinen-Energieerzeugungsvorrichtung (1) nach Anspruch 5, die ferner einen Antriebsstrang (60) zum Übertragen der Drehung des Windturbinenrotors (2) an den Generator (7) aufweist,
wobei der Antriebsstrang (60) Folgendes umfasst
eine Hydraulikpumpe (61), die so konfiguriert ist, dass sie durch Drehung des Windturbinenrotors (2) angetrieben wird und druckbeaufschlagtes Öl durch Druckbeaufschlagung von Arbeitsöl erzeugt;
einen Hydraulikmotor (62), der so konfiguriert ist, dass er den Generator mit dem von der Hydraulikpumpe (61) zugeführten druckbeaufschlagten Öl antreibt;
eine Hochdruckleitung (63A) und eine Niederdruckleitung (63B), die zwischen der Hydraulikpumpe (61) und dem Hydraulikmotor (62) angeordnet sind;
eine Bypassleitung (63C), die mit der Hochdruckleitung (63A) und der Niederdruckleitung (63B) verbunden ist, damit sie den Hydraulikmotor (62) umgeht; und
ein Bypassventil (64) zum Steuern eines Flusses des Arbeitsöls in der Bypassleitung (63C), und
wobei die Steuerung (30) so konfiguriert ist, dass sie das Bypassventil (64) öffnet, um das Arbeitsöl in der Hochdruckleitung (63A) nicht über den Hydraulikmotor (62) zur Niederdruckleitung (63B) zu führen, während die Windturbinen-Energieerzeugungsvorrichtung (1) im Aufwärmbetrieb betrieben wird.

7. Verfahren zum Starten einer Windturbinen-Energieerzeugungsvorrichtung (1), umfassend: einen Windturbinenrotor (2) mit zumindest einem Rotorblatt (3); einen Neigungsantriebsteil (20) zum Ändern eines Neigungswinkels des zumindest einen Rotorblatts (3); einen Generator (7), der so konfiguriert ist, dass er durch Rotationsenergie des Windturbinenrotors (2) angetrieben wird; und einen Schutzschalter (10) zum Schalten eines Verbindungszustands des Generators (7) in Bezug auf ein Versorgungsnetz (100), wobei das Verfahren Folgendes umfasst:
einen Neigungssteuerschritt zum Steuern des Neigungsantriebsteils (20) in einem konstanten Drehzahlregelungsmodus zum Begrenzen einer Änderungsrate des Neigungswinkels, die nicht größer als ein oberer Grenzwert sein soll, bevor eine Drehzahl des Windturbinenrotors (2) eine Solldrehzahl erreicht, die einer Verbindungsdrehzahl des Generators (7) entspricht, und Halten der Drehzahl des Windturbinenrotors (2) auf der Solldrehzahl, und
einen Verbindungsbefehl-Erzeugungsschritt mit Bereitstellen eines Verbindungsbefehls für den Schutzschalter (10), um den Generator (2) mit dem Versorgungsnetz (100) zu verbinden, während die Drehzahl des Windturbinenrotors (2) bei der Solldrehzahl gehalten wird,
wobei der Neigungssteuerschritt Folgendes umfasst
Steuern des Neigungsantriebsteils, so dass sich der Neigungswinkel gemäß einem vorbestimmten Neigungsplan von dem Zeitpunkt an ändert, an dem der Windturbinenrotor (2) gestoppt wird, bis zu dem Zeitpunkt, an dem die Drehzahl einen ersten Drehzahlschwellenwert erreicht, der kleiner als die Solldrehzahl ist, und
Steuern des Neigungsantriebsteils im Konstantdrehzahl-Regelungsmodus, wenn die Drehzahl zumindest beim ersten Drehzahlschwellenwert liegt,
wobei der Neigungsplan so konfiguriert ist, dass der Neigungswinkel mit zumindest einer Neigungsrate in Richtung einer feinen Seite geändert wird, um einen Bereitschaftsneigungswinkel zu erreichen, und der Neigungswinkel so lange bei einem Bereitschaftsneigungswinkel konstant gehalten wird, bis die Drehzahl des Windturbinenrotors (2) einen zweiten Drehzahlschwellenwert erreicht, der kleiner als der erste Drehzahlschwellenwert ist,
**dadurch gekennzeichnet, dass**
der Neigungsplan so konfiguriert ist, dass der Neigungswinkel mit zumindest einer Neigungsrate in Richtung der feinen Seite aus dem Bereitschaftsneigungswinkel geändert wird, wenn die Drehzahl des Windturbinenrotors (2) den zweiten Drehzahlschwellenwert erreicht.

8. Verfahren zum Starten einer Windturbinen-Energieerzeugungsvorrichtung (1) nach Ansprüche 7, ferner umfassend
einen Startup-Bedingungs-Bestimmungsschritt mit Bestimmung, ob eine Startup-Bedingung der Windturbinen-Energieerzeugungsvorrichtung (1) erfüllt ist, wobei die Startup-Bedingung einschließt, dass ein Parameter, der eine Windgeschwindigkeit des Windes darstellt, der auf die Windturbinen-Energieerzeugungsvorrichtung einwirkt, zumindest ein erster Windgeschwindigkeits-Schwellenwert ist.

9. Verfahren zum Starten einer Windturbinen-Energieerzeugungsvorrichtung (1) nach Anspruch 8,
wobei der Neigungssteuerschritt Folgendes umfasst
Steuern des Neigungsantriebsteils (20) im Konstantdrehzahl-Regelungsmodus, wenn der Parameter nicht kleiner als ein zweiter Windgeschwindigkeits-Schwellenwert ist, der kleiner als der erste Windgeschwindigkeits-Schwellenwert ist, und
wenn der Neigungswinkel einen Grenzwert der feinen Seite erreicht hat und der Parameter kleiner als der zweite Windgeschwindigkeits-Schwellenwert ist, folgende Schritte ausführen: Ändern des Neigungswinkels zu einer Federseite.

## Revendications

1. Appareil de génération d'énergie éolienne (1) pour générer de l'énergie électrique à partir de l'énergie du vent, comprenant :
un rotor d'éolienne (2) comprenant au moins une aube (3) ;
une partie d'entraînement de pas (20) pour modifier un angle de pas de la au moins une aube (3) ;
un générateur (7) configuré pour être entraîné par l'énergie rotative du rotor d'éolienne (2) ;
un disjoncteur (10) pour commuter un état de raccordement du générateur (7) par rapport à un réseau électrique (100) ; et
un organe de commande (30) pour commander l'appareil de génération d'énergie éolienne (1), l'organe de commande (30) comprenant :
une partie de commande de pas (31) configurée pour commander la partie d'entraînement de pas (20) dans un mode de commande de vitesse de rotation constante pour limiter un taux de changement de l'angle de pas afin qu'il ne soit pas supérieur à une valeur de limite supérieure, avant qu'une vitesse de rotation du rotor d'éolienne (2) atteigne une vitesse de rotation cible correspondant à une vitesse de rotation de raccordement du générateur (7), et maintenir la vitesse de rotation du rotor d'éolienne (2) à la vitesse de rotation cible, et
une partie de génération de commande de raccordement (32) configurée pour doter le disjoncteur (10) d'une commande de raccordement afin de raccorder le générateur (7) au réseau électrique (100) alors que la vitesse de rotation du rotor d'éolienne (2) est maintenue à la vitesse de rotation cible, dans lequel la partie de commande de pas (31) est configurée pour :
commander la partie d'entraînement de pas (20) de sorte que l'angle de pas change selon un programme de pas prédéterminé à partir du moment où le rotor d'éolienne (2) est arrêté jusqu'au moment où la vitesse de rotation atteint une première valeur de seuil de vitesse de rotation inférieure à la vitesse de rotation cible, et
commander la partie d'entraînement de pas (20) dans un mode de commande de vitesse de rotation constante lorsque la vitesse de rotation atteint la première valeur de seuil de vitesse de rotation ou une valeur supérieure,
dans lequel le programme de pas est configuré de sorte que l'angle de pas est modifié à au moins un taux de pas vers un côté fin pour atteindre un angle de pas de réserve, et lorsque l'angle de pas atteint l'angle de pas de réserve, l'angle de pas est maintenu pour être constant à l'angle de pas de réserve jusqu'à ce que la vitesse de rotation du rotor d'éolienne (2) atteigne une seconde valeur de seuil de vitesse de rotation inférieure à la première valeur de seuil de vitesse de rotation,
**caractérisé en ce que** :
le programme de pas est configuré de sorte que l'angle de pas est modifié au au moins un taux de pas vers le côté fin à partir de l'angle de pas de réserve lorsque la vitesse de rotation du rotor d'éolienne (2) atteint la seconde valeur de seuil de vitesse de rotation.

2. Appareil de génération d'énergie éolienne (1) selon la revendication 1,
dans lequel l'organe de commande (30) comprend en outre une partie de détermination de condition de démarrage (33) configurée pour déterminer si une condition de démarrage de l'appareil de génération d'énergie éolienne (1) est satisfaite, la condition de démarrage comprenant le fait qu'un paramètre représentant une vitesse de vent du vent agissant sur l'appareil de génération d'énergie éolienne (1) est au moins une première valeur de seuil de vitesse de vent.

3. Appareil de génération d'énergie éolienne (1) selon la revendication 2,
dans lequel la partie de commande de pas (31) est configurée pour :
commander la partie d'entraînement de pas (20) dans le mode de commande de vitesse de rotation constante si le paramètre n'est pas inférieur à une seconde valeur de seuil de vitesse de vent qui est inférieure à la première valeur de seuil de vitesse de vent, et
si l'angle de pas a atteint une valeur de limite du côté fin et si le paramètre est inférieur à la seconde valeur de seuil de vitesse de vent, réaliser : le passage de l'angle de pas à un côté aminci.

4. Appareil de génération d'énergie éolienne (1) selon l'une quelconque des revendications 1 à 3,
dans lequel l'organe de commande (30) comprend en outre une partie de détermination de synchronisation (34) configurée pour, si la commande de raccordement de la partie de génération de commande de raccordement est reçue, déterminer si la différence entre une tension, une phase et une fréquence du générateur (7) et une tension, une phase et une fréquence du réseau électrique (100) est dans une plage autorisée de synchronisation, et
dans lequel le disjoncteur (10) est configuré pour être fermé si la partie de détermination de synchronisation (32) détermine que la différence est dans la plage autorisée de synchronisation.

5. Appareil de génération d'énergie éolienne (1) selon l'une quelconque des revendications 1 à 4,
dans lequel l'organe de commande (30) est configuré pour, alors que l'appareil de génération d'énergie éolienne (1) est actionné dans un mode de fonctionnement de chauffage, commander l'appareil de génération d'énergie éolienne (1) dans le mode de fonctionnement de chauffage afin de faire tourner le rotor d'éolienne (2) sans charge sans entrer la commande de raccordement à partir de la partie de génération de commande de raccordement.

6. Appareil de génération d'énergie éolienne (1) selon la revendication 5, comprenant en outre une transmission (60) pour transmettre la rotation du rotor d'éolienne (2) au générateur (7),
dans lequel la transmission (60) comprend :
une pompe hydraulique (61) configurée pour être entraînée par la rotation du rotor d'éolienne (2) et pour produire de l'huile sous pression en mettant sous pression l'huile de travail ;
un moteur hydraulique (62) configuré pour entraîner le générateur en utilisant l'huile sous pression fournie par la pompe hydraulique (61) ;
une conduite haute pression (63A) et une conduite basse pression (63B) disposée entre la pompe hydraulique (61) et le moteur hydraulique (62) ;
une conduite de dérivation (63C) raccordée à la conduite haute pression (63A) et la conduite basse pression (63B) afin de contourner le moteur hydraulique (62) ; et
une valve de dérivation (64) pour commander un écoulement de l'huile de travail dans la conduite de dérivation (63C), et
dans lequel l'organe de commande (30) est configuré pour ouvrir la valve de dérivation (64) afin de guider l'huile de travail dans la conduite haute pression (63A) jusqu'à la conduite basse pression (63B) mais pas par le moteur hydraulique (62), alors que l'appareil de génération d'énergie éolienne (1) est actionné dans le mode de fonctionnement de chauffage.

7. Procédé pour démarrer un appareil de génération d'énergie éolienne (1) comprenant : un rotor d'éolienne (2) comprenant au moins une aube (3) ; une partie d'entraînement de pas (20) pour modifier un angle de pas de la au moins une aube (3) ; un générateur (7) configuré pour être entraîné par l'énergie de rotation du rotor d'éolienne (2) ; et un disjoncteur (10) pour commuter un état de raccordement du générateur (7) par rapport à un réseau électrique (100), le procédé comprenant :
une étape de commande de pas pour commander la partie d'entraînement de pas (20) dans un mode de commande de vitesse de rotation constante afin de limiter un taux de changement de l'angle de pas pour qu'il ne soit pas supérieur à une valeur de limite supérieure avant qu'une vitesse de rotation du rotor d'éolienne (2) ait atteint une vitesse de rotation cible correspondant à une vitesse de rotation de raccordement du générateur (7) et maintenir la vitesse de rotation du rotor d'éolienne (2) à la vitesse de rotation cible, et
une étape de génération de commande de raccordement pour doter le disjoncteur (10) d'une commande de raccordement afin de raccorder le générateur (2) au réseau électrique (100) alors que la vitesse de rotation du rotor d'éolienne (2) est maintenue à la vitesse de rotation cible,
dans lequel l'étape de commande de pas comprend les étapes suivantes :
commander la partie d'entraînement de pas de sorte que l'angle de pas change selon un programme de pas prédéterminé à partir du moment où le rotor d'éolienne (2) est arrêté, jusqu'au moment où la vitesse de rotation atteint une première valeur de seuil de vitesse de rotation inférieure à la vitesse de rotation cible, et
commander la partie d'entraînement de pas dans le mode de commande de vitesse de rotation constante lorsque la vitesse de rotation est au moins à la première valeur de seuil de vitesse de rotation,
dans lequel le programme de pas est configuré de sorte que l'angle de pas est modifié à au moins un taux de pas vers un côté fin pour atteindre un angle de pas de réserve, et lorsque l'angle de pas atteint l'angle de pas de réserve, l'angle de pas est maintenu pour être constant à l'angle de pas de réserve jusqu'à ce que la vitesse de rotation du rotor de turbine (2) atteigne une seconde valeur de seuil de vitesse de rotation inférieure à la première valeur de seuil de vitesse de rotation,
**caractérisé en ce que** :
le programme de pas est configuré de sorte que l'angle de pas est modifié à au moins un taux de pas vers le côté fin à partir de l'angle de pas de réserve lorsque la vitesse de rotation du rotor d'éolienne (2) atteint la seconde valeur de seuil de vitesse de rotation.

8. Procédé pour démarrer un appareil de génération d'énergie éolienne (1) selon la revendication 7, comprenant en outre :
une étape de détermination de condition de démarrage pour déterminer si une condition de démarrage de l'appareil de génération d'énergie éolienne (1) est satisfaite, la condition de démarrage comprenant le fait qu'un paramètre représentant une vitesse de vent du vent agissant sur l'appareil de génération d'énergie éolienne est au moins à une première valeur de seuil de vitesse de vent.

9. Procédé pour démarrer un appareil de génération d'énergie éolienne (1) selon la revendication 8,
dans lequel l'étape de commande de pas comprend l'étape suivante :
commander la partie d'entraînement de pas (20) dans le second mode de commande de vitesse de rotation constante si le paramètre n'est pas inférieur à une seconde valeur de seuil de vitesse de vent qui est inférieure à la première valeur de seuil de vitesse de vent, et
si l'angle de pas a atteint une valeur de limite du côté fin et que le paramètre est inférieur à la seconde valeur de seuil de vitesse de vent, réaliser : le passage de l'angle de pas à un côté aminci.
